(19) Europäisches Patentamt / European Patent Office / Office européen des brevets

(11) **EP 4 361 895 A1**

(12) **EUROPEAN PATENT APPLICATION**

(43) Date of publication:
**01.05.2024 Bulletin 2024/18**

(21) Application number: **22204435.6**

(22) Date of filing: **28.10.2022**

(51) International Patent Classification (IPC):
**G06N 3/08** (2023.01)    **G06N 3/045** (2023.01)
**G06F 21/60** (2013.01)

(52) Cooperative Patent Classification (CPC):
**G06F 21/602; G06N 3/044; G06N 3/045; G06N 3/08; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy 02610 Espoo (FI)**

(72) Inventors:
• **Malekzadeh, Mohammad**
  **Cambridge, CB3 0FA (GB)**
• **Mathur, Akhil**
  **Cambridge, CB3 0FA (GB)**

(74) Representative: **Swindell & Pearson Limited**
  **48 Friar Gate**
  **Derby DE1 1GY (GB)**

(54) **MACHINE LEARNING**

(57)    An apparatus comprising: means for providing a first secret and data as inputs to a trained neural network to produce an output by inference; means for sending the output from the trained neural network to a remote server; means for receiving in reply from the server, an encoded label; means for using a second secret to decode the encoded label to obtain a label for the data.

FIG 4B

**Description**

TECHNOLOGICAL FIELD

Examples of the disclosure relate to machine learning, in particular machine learning using spatially distributed apparatuses that have low computational resources.

BACKGROUND

Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example.

Artificial neural networks, for example with one or more hidden layers, model complex relationship between input vectors and output vectors.

It can be useful in some circumstances to split (partition) neural networks over multiple devices for training and/or for inference. The communications at the interfaces between partitions of the neural network could be intercepted. It is therefore desirable to secure such communications to obscure private data. It is desirable to achieve this without using significant additional computational resources.

BRIEF SUMMARY

According to various, but not necessarily all, examples there is provided an apparatus comprising:

means for providing a first secret and data as inputs to a trained neural network to produce an output by inference;
means for sending the output from the trained neural network to a remote server; means for receiving in reply from the server, an encoded label;
means for using a second secret to decode the encoded label to obtain a label for the data.

In some but not necessarily all examples, the first secret and the second secret are the same secret.

In some but not necessarily all examples, the apparatus comprises means for randomly selecting the same secret from a population of sample secrets.

In some but not necessarily all examples, the population of sample secrets is controlled by the server.

In some but not necessarily all examples, the encoded label is a permuted one hot label, wherein the second secret recovers the unpermuted one hot label.

In some but not necessarily all examples, the apparatus comprises means for decoding the encoded label using a decoding algorithm controlled by the server or means for decoding the encoded label using a modulo function.

In some but not necessarily all examples, the trained neural network is an encoder, defining one or more layers of artificial neurons, to be used as an input portion of a primary neural network that comprises the encoder and a predictor, defining one or more layers of artificial neurons, to be used as an output portion of the primary neural network.

In some but not necessarily all examples, the trained neural network, the encoder, is initially received from a server, where the data and the secret are inputs to the trained neural network, the encoder.

In some but not necessarily all examples, the data is input at a first layer of the trained neural network.

In some but not necessarily all examples, the first secret is input at a layer after the first layer of the trained neural network and/or

first secret is input at a layer after the second layer of the trained neural network and/or
first secret is input at a layer before the last layer of the trained neural network.

In some but not necessarily all examples, the system is configured for split inference comprising a server and an apparatus as claimed in any preceding claim, wherein the server is configured to

receive, from the apparatus, the outputs from of the trained neural network; providing the received output as an input a different trained neural network to produce an encoded label;

sending the encoded label to the apparatus.

In some but not necessarily all examples, the trained neural network is an encoder defining one or more layers of artificial neurons, to be used as an input portion of a primary neural network that comprises the encoder and a predictor, and the different trained neural network
is a predictor defining one or more layers of artificial neurons, to be used as an output portion of the primary neural network that comprises the encoder and the predictor.

In some but not necessarily all examples, the server is configured to train the encoder and the predictor and provides the encoder to the apparatus

In some but not necessarily all examples, a system comprisies means that, for each of a collection of different first secrets, uses a first secret to encode data to produce an encoded label using an encoding algorithm that is used to train the primary neural network that is then partitioned.

In some but not necessarily all examples, the system comprises means for providing the first secrets to the apparatus and for providing the encoder to the apparatus. According to various, but not necessarily all, examples there is provided a method of providing privacy without encryption in relation to split inference comprising: providing a first secret and data as inputs to a trained encoder neural network to produce an output by inference;

sending the output from the trained neural network to a remote server for completion of inference by a predictor;
receiving in reply from the server, an encoded label;
using a second secret to decode the encoded label to obtain a label for the data.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1A shows an example of training a neural network;
FIG. 1B shows an example of inference using a trained a neural network;
FIG. 2 shows an example of a neural network;
FIG. 3A shows an example of an encoder neural network (an early-stage partition of a primary neural network);
FIG. 3B shows an example of a predictor neural network (a late-stage partition of a primary neural network);
FIG. 4A shows an example of training a neural network using one or more secrets;
FIG. 4B shows an example of inference using a trained neural network using the one or more secrets;
FIG. 5 shows an example of training a neural network, partitioning the trained neural network and perform split inference, split between a client apparatus and a server;
FIG. 6 shows an example of secret selection;
FIG 7 shows an example of a label and an encoded label;
FIG 8 shows an example of a method;
FIG 9 shows an example of a controller;
FIG 10 shows an example of a computer program.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

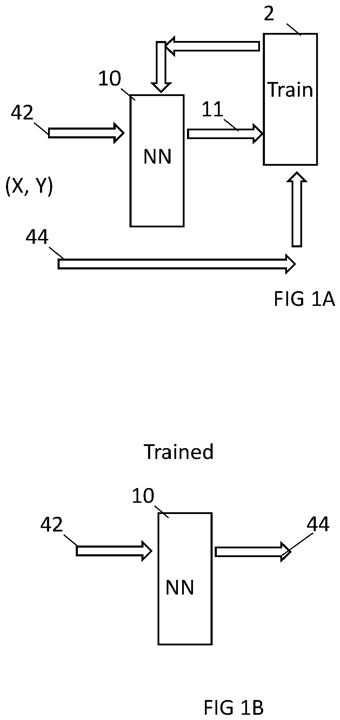

FIG 1 illustrates an example of training a neural network 10. Input data 42 and its associated label 44 are input to the neural network for inference. The inference produces a putative label 11. The putative label 11 and the associated label 44 are used for training the neural network 10 so that the neural network can better reproduce as its output the correct label. The neural network 10 can be for example, a deep neural network (DNN), a convolutional neural network (CNN), etc. In some examples, the neural network 10 can be a pretrained model. In some examples, the pretrained model can be further trained / tuned be new data which type and structure matches the training data of the pretrained model. The pretrained model can be for example a VGG19 or Inceptionv3 (GoogLeNet). Arrhythmia Dataset, Parkinson Speech Dataset, Daily and Sports Activities Dataset are data sets and types that can be used to train and/or tune the neural network 10.

The data set includes pairs of input data X and ground-truth labels Y. The dataset is split into a training data set and a validation data set. The training data set is split into discrete batches. For each (X, Y) in a batch, the model produces a putative label 11 which is compared with the label 44 to determine a loss. The neural network is updated based on the average gradient losses for the model across the batch. The model is then computed on the validation data to determine a validation loss. If the validation loss is less than the smallest validation loss so far, then the model is saved as the current model.

FIG 1B illustrates use of the trained neural network 10 for inference. The data 42 is input to the neural network 10 for inference. The neural network produces as an output a label 44 for the input data 42.

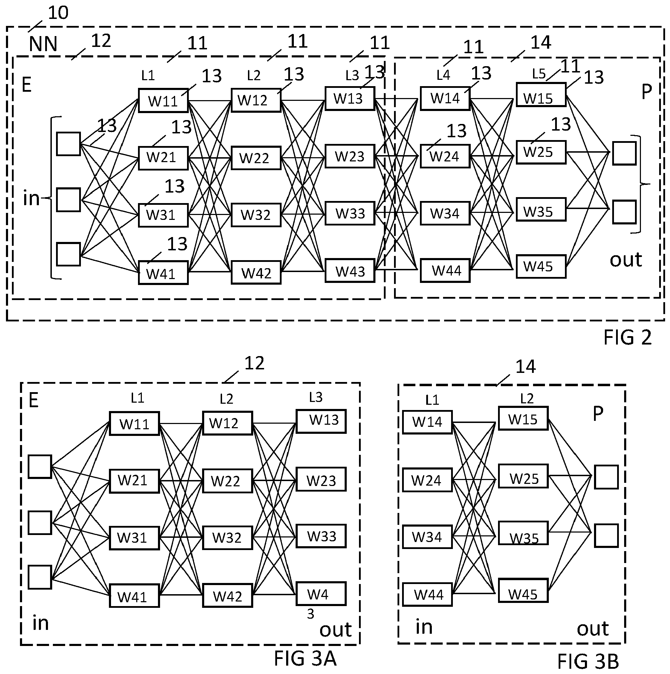

FIG 2 illustrates an example of an artificial neural network model (M) also known as a 'neural network'.

The neural network 10 comprising a plurality of nodes 13 arranged in layers 11. The layers include an input layer, an output layers and one or more intermediate or hidden layers between the input layer and the output layer. The network has a forward direction from input to output and a backwards direction from output to input.

The node in one layer is interconnected, separately, to one or more or each of the nodes in the preceding layer (if any) and is interconnected, separately, to one or more or each of the nodes in the following layer (if any). The neural network forms a directed, weighted graph. Each node has a weight that determines the strength of a nodes influence on a connected node in the forward direction.

Fig 2 illustrates a logical partitioning of the neural network 10, the primary neural network, into two component parts- an encoder (E) 12 and a predictor (P) 14. The partition (cut) in the neural network 10 is between an output layer of the encoder 12 and an input layer of the predictor 14. The predictor 14 follows the encoder 12 in the forward direction.

Figs 3A and 3B illustrates partitioned parts of the primary neural network 10. FIG 3A illustrates an example of an encoder 12 of the primary neural network 10 illustrated in FIG 2. FIG 3B illustrates an example of a predictor 14 of the primary neural network 10 illustrated in FIG 2. It will be appreciated that as the position of the partition (cut) between layers 11 of the neural network 10 changes an architecture (number of layers 11) of the predictor 14 and changes an architecture (number of layers 11) of the encoder 12 changes.

The encoder 12 is itself a neural network having an input layer and an output layer. The encoder input layer is the same as the input layer of the primary neural network 10. The encoder 12 is an early-layers feature extractor. It encodes input data as discerning large-scale features.

The predictor 14 is itself a neural network having an input layer and an output layer. The predictor output layer is the same as the output layer of the primary neural network 10. The predictor 14 is a late-layers analyzer / feature extractor. It provides a prediction (data label) about the underlying task (that could be a classification, regression, or forecasting or any other type of inference-making functionality).

In at least some examples, the partitioning produces the encoder 12 that is larger than the predictor 14. For example, the partitioning can produce the encoder 12 that has more layers 11 than the predictor 14. For example, the partitioning can produce the encoder 12 that has more nodes 13 than the predictor 14.

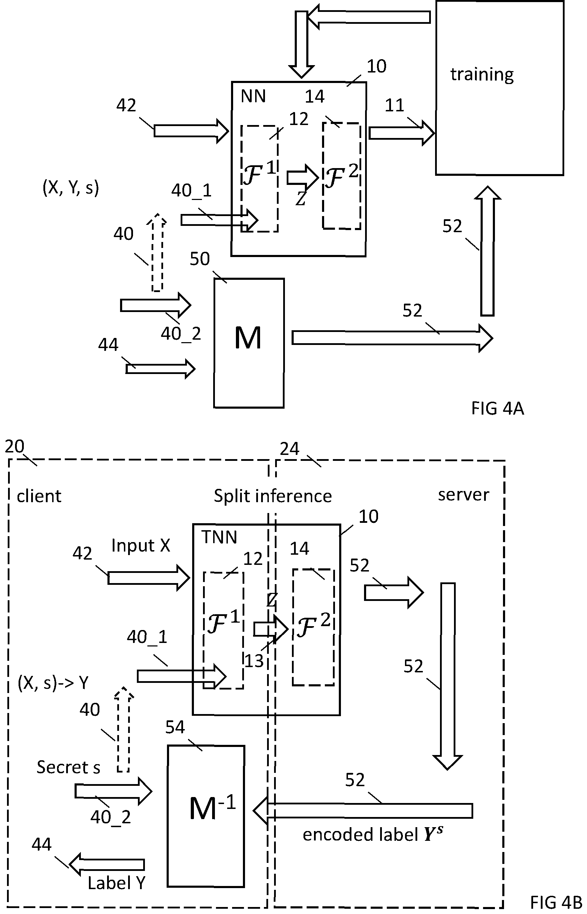

Split inference is an inference that uses a partitioned neural network architecture. The encoder 12 is hosted, for example, at a client apparatus 20 and the predictor 14 is hosted, for example, at a server apparatus 24 (Fig. 4B).

Split inference not only provides efficiency (compared to the client-only inference), but it also provides some level of privacy (compared to the server-only inference).

It can be undesirable to share data. A user is reluctant to share private data with a remote server. The owners of the server are reluctant to share proprietary neural network models with the user's client apparatus 20.

Split inference offers some level of privacy for the input data, as the client does not share the original data (e.g., a medical image), and only sends the intermediate features of the data (i.e., the output of the cut layer). Thus, although the input data is kept private at client side, the encoder 12 output is observed by the (semi-trusted or untrusted) server 24.

It would be desirable to make the server 24 unaware of true input to the primary neural network (input to the encoder 12) and true outputs from the primary neural network (outputs from the predictor 14) when performing split-inference.

To keep both inputs and outputs private, one solution is to perform encrypted computing, where cryptographic techniques are used to protect both the private data of client and the proprietary model of server from each other. But encrypted computing causes huge computational burden and is not applicable for many situations in pervasive computing where efficiency is an important aspect of the inference.

In the following an outcome of split inference is hidden from the server 24 without imposing additional computation burden. There is a new training approach, which creates a new trained model. At inference time, the client apparatus 20 can change the semantic of the model's output and thus prevent the server 24 from understanding the genuine outcome of the inference of the encoder 12 (received as an input) and of the predictor 14 (produced as an output) without imposing any significant computational burden.

In some examples, the client apparatus 20 is a wired or wireless apparatus, such as a sensor terminal apparatus, and comprises one or more control circuitry 400, wireless or wired transceiver circuitry , sensor circuitry and one or more memory modules. The control circuitry 400 is configured to perform inference on data captured by the sensor circuitry 32 using the encoder 12.

The control circuitry 400 is configured to perform inference using the encoder 12.

In some examples, the apparatus 20 has limited computational resources available at the control circuitry 400. The computational resources can for example include memory resources and/or processor resources. The control circuitry 400 can, in some examples, be a microcontroller unit (MCU).

The apparatus 20 can be terminal point in a communication system. The terminal apparatus 20 is configured to communicate wirelessly using the transceiver circuitry 30. In some but not necessarily all examples, the transceiver circuitry 30 is a radio transceiver.

The communication route between the apparatus 20 and the server 24 can be direct or indirect.

FIG 4A illustrates a method of training a primary neural network 10 which comprises an encoder 12 and a predictor 14. In this example, the training of the primary neural network 10 occurs before partitioning. In other examples, partitioning can occur before training and in these examples the encoder 12 and the predictor 14 are interconnected for forward propagation and back propagation.

The following similarities and differences with FIG 1A are noted.

There are some similarities in training in that both receive as inputs labeled data. This includes data 42 and a label 44. The training process of FIG 4A also has as additional inputs first secret 40_1 and second secret 40_2.

In a manner similar to FIG 1A, the primary neural network 10 receives data 42 as an input and produces a putative output 11 which is used for training against a 'truth value' (the label 44 in FIG 1A).

However, in FIG 4A, the neural network 10 (the encoder 12) has a model that receives a first secret 40_1. The 'truth value' used for training is not the label 44 but an encoded version of the label 44 - an encoded label 52. The encoded label 52 is produced by using a function 50 to convert the label 44 and a second secret 40_2 into the encoded label 52.

Another difference is partitioning of the primary neural network 10 into an encoder 12 and a predictor 14.

The encoder 12, defines one or more layers of artificial neurons, to be used as an input portion of a primary neural network 10 that comprises the encoder 12 and the predictor 14.

The predictor 14 defines one or more layers of artificial neurons, to be used as an output portion of the primary neural network 10 that comprises the encoder 12 and the predictor 14.

The neural network 10 is therefore trained to convert a combination of first secret 40_1 and data 42 into an encoded label 52 which can be decoded using the inverse function 54 to the function 50 used for encoding. This inference process is split as illustrated in FIG 4B. As can be seen in FIG 4B, after training, the encoder 12 is hosted by the client apparatus 20 and the predictor 14 is hosted by the server apparatus 24.

In at least some examples, there is a restriction on a number or type of layers that can be used in the encoder 12. In other examples, there is no restriction on a number or type of layers that can be used in the encoder 12.

The first secret 40_1 and the second secret 40_2 can be the same secret 40.

In some examples, the method illustrated in FIG 4A occurs at a server 24 and the encoder 12 is sent from the server 24 to the client apparatus 20.

FIG 4B illustrates a split inference process using a server 24 and client apparatus 20.

The encoder 12 can be run under control of the client apparatus 20. The secret and input (after training) can be chosen by the client apparatus 20.

The client apparatus 20 provides a first secret 40_1 and data 42 as inputs to a trained neural network 12 (an encoder) to produce an output 13 by inference.

The client apparatus 20 sends the output 13 from the trained neural network 12 to the remote server 24.

The remote server 24 receives, from the apparatus 20, the output 13 from of the trained neural network 12 (encoder);

The remote server 24 provides the received output 13 as an input to a different trained neural network 14 (predictor) to produce an encoded label 52,

The remote server 24 sends the encoded label 52 to the apparatus 20, in reply.

The client apparatus 20 receives from the server 24, the encoded label 52.

The client apparatus 20 uses a second secret 40_2 to decode the encoded label 52 to obtain a label 44 for the data 42.

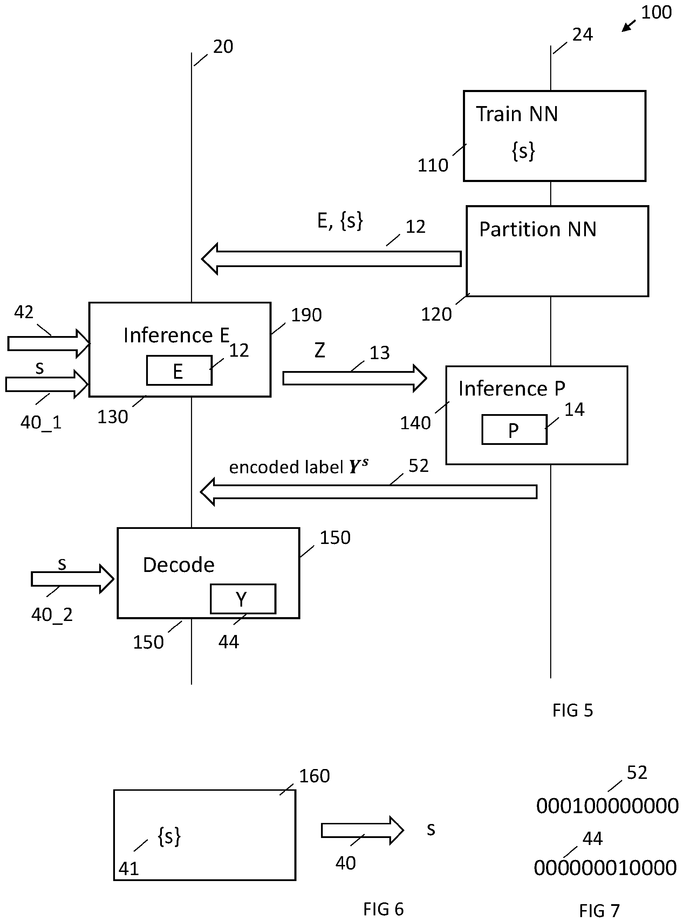

The system 100 illustrated in FIG 5 comprises the server 24 and the client apparatus 20.

The server 24 is configured to receive, from the apparatus 20, the output 13 from of the trained neural network 12 (encoder); provide the received output 13 as an input to a different trained neural network 14 (predictor) to produce an encoded label 52; and send the encoded label 52 to the client apparatus 20.

The client apparatus 20 comprises:

means for providing a first secret 40_1 and data 42 as inputs to a trained neural network 12 (encoder) to produce an output 13 by inference;
means for sending the output 13 from the trained neural network 12 (encoder) to a remote server 24;
means for receiving in reply from the server 24, an encoded label 52;
means for using a second secret 40_2 to decode the encoded label 52 to obtain a label 44 for the data 42.

In some but not necessarily all examples, the decoding 54 of the encoded label 52 uses a decoding algorithm controlled by server 24. In other examples, the decoding 54 of the encoded label 52 uses a modulo function.

The encoded label 52 has been produced as an output from a predictor neural network 14 at the server 24. The predictor neural network 14 takes as its input the output 13 from the trained encoder neural network 12.

In at least some examples, the primary neural network 10 has an architecture where the data 42 is input at first layer 11 of trained neural network 10 (first layer of the encoder 12).

In at least some examples, the primary neural network 10 has an architecture where the first secret 40_1 is input at the first layer 11 of the trained neural network 10 (first layer of the encoder 12). In other examples, the primary neural network 10 has an architecture where the first secret 40_1 is input at a layer other than the first layer 11 of the trained neural network 10 (other than the first layer of the encoder 12). For example at the second layer 11 of the trained neural network 10 (the second layer of the encoder 12) or at any layer before the last layer 11 of the encoder neural network 12.

In at least some examples, a design parameter for the primary neural network (and partitioning of the neural network) is which layer of the encoder the first secret 40_1 is an input to.

FIG 5 illustrates training and split inference processes using a server 24 and client apparatus 20.

At block 110, the server 24 trains the primary neural network 10 using a collection of the secrets {s}.

The first secret 40_1 and the second secret 40_2 can be the same secret 40 or can be different secrets. If they are different secrets they can be associated. For example they can be associated as a secret couplet comprising the first secret 40_1 and the second secret 40_2.

In the following it is assumed that the first secret 40_1 and the second secret 40_2 is the same secret 40 and the collection of secrets is a collection of different secrets 40. Subsequent selection of a secret from the collection of secrets {s} will be selection of a secret 40 used for neural network input and decoding. In other examples the first secret 40_1 and the second secret 40_2 can be different and form a couplet, and the collection of secrets is a collection of couplets (40_1, 40_2). Subsequent selection of a secret from the collection of secrets {s} will be selection of a couplet of secrets comprising a first secret 40_1 used for neural network input and a second secret 40_2 used for decoding.

The training process can be performed for multiple secrets {s} that is multiple common secrets 40 or multiple couplets (40_1, 40_2) or for a mixture of common secrets 40 and secret couplets (40_1, 40_2). This creates a population of secrets {s} from which the client apparatus 20 can secretly choose e.g. using a random process. This obscures the secret used from the server 24.

Thus, at training, for a collection of different first secrets 40_1:
the first secret 40_1 is used to encode data 42 to produce an encoded label 52 using an encoding algorithm; and the encoded label 52 is used to train the primary neural network 10

At block 120, the server 24 partitions the primary neural network 10 into an early-stage encoder 12 and a later-stage predictor 14. The server apparatus 24 sends the encoder E 12 and the collection of secrets {s} to the client apparatus 20.

The client apparatus 20 provides a first secret 40_1 and data 42 as inputs to a trained neural network 12 (an encoder) to produce an output 13 by inference.

The client apparatus 20 sends the output 13 from the trained neural network 12 to the remote server 24.

The remote server 24 receives, from the apparatus 20, the output 13 from of the trained neural network 12 (encoder). The remote server 24 provides the received output 13 as an input to a different trained neural network 14 (predictor) to produce an encoded label 52. The remote server 24 sends the encoded label 52 to the apparatus 20, in reply.

The client apparatus 20 receives from the server 24, the encoded label 52. The client apparatus 20 uses a second secret 40_2 to decode the encoded label 52 to obtain a label 44 for the data 42.

FIG 6 illustrates selection 160 of a secret s from a collection of secrets {s}

In some examples, as illustrated, the first secret 40_1 and the second secret 40_2 is the same secret 40 and the collection of secrets is a collection of secrets 40. Subsequent selection of a secret from the collection of secrets {s} will be selection of a secret 40 used for neural network input and decoding.

In these example or other examples the first secret 40_1 and the second secret 40_2 is different and form a couplet, and the collection of secrets is a collection of couplets (40_1, 40_2). Subsequent selection of a secret from the collection of secrets {s} will be selection of a couplet of secrets comprising a first secret 40_1 used for neural network input and a second secret 40_2 used for decoding.

In some examples the secret is randomly selected from a population 41 of sample secrets 40. In at least some examples, the population 41 of sample secrets is controlled by a server 24. This can, for example comprises the sending of the secrets from the server 24 to the apparatus 20 either with or without encryption. This can, for example comprises the sending a kernel for generation of secrets from the server 24 to the apparatus 20 either with or without encryption. In some other or additional examples, the population 41 of sample secrets is controlled by the apparatus 20. This can, for example comprises the sending of the secrets from the apparatus 20 to the server 24 either with or without encryption. This can, for example comprises the sending a kernel for generation of secrets from the apparatus 20 to the server 24 either with or without encryption.

The secret selected is known only to the client apparatus 20 and is not known by the server apparatus 24. This secret is used to both encode the output 13 sent (via the trained encoder neural network 12) and to decode the (encoded) output received from the remote predictor neural network 14.

The secret 40 is given to the neural network 12 as input and neural network encodes the output. Then after receiving the encoded output from the server, the client 20 uses the same secret 40 to decode the output.

The client can arbitrary change the semantic of the model's output by selection of a secret.

FIG 7 illustrates an example of a label 44 and an encoded label 52.

In this example the label 44 is a hot label and the encoded label 52 is a hot label.

A hot label has a series of bits but only one of the bits is one and the rest are zero.

The encoded label 52 is a permuted one hot label. The decoding performed using the second secret 40_2 recovers the unpermuted one hot label.

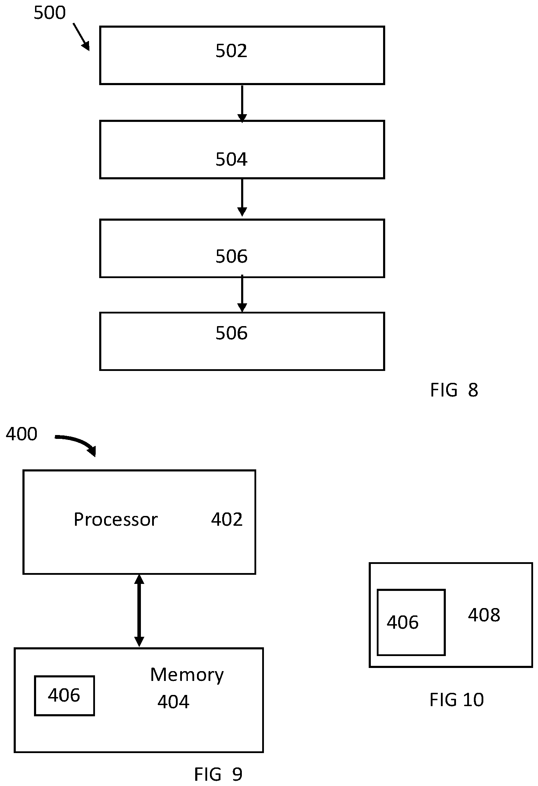

FIG 8 illustrates a method 500 of providing privacy without encryption in relation to split inference comprising:

at block 502, providing a first secret 40_1 and data 42 as inputs to a trained neural network 10 to produce an output 13 by inference;
at block 504, sending the output 13 from the trained neural network 10 to a remote server 24 for completion of inference;
at block 506, receiving in reply from the server 24, an encoded label 52;
at block 506, using a second secret 40_2 to decode the encoded label 52 to obtain a label 44 for the data 42.

The method 500 is a method of providing privacy without encryption in relation to split inference. It comprises:

providing a first secret 40_1 and data 42 as inputs to a trained encoder neural network 12 to produce an output 13 by inference;
sending the output 13 from the trained encoder neural network 12 to a remote server 24 for completion of inference by a predictor neural network 14;
receiving in reply from the server 24, an encoded label 52;
using a second secret 40_2 to decode the encoded label 52 to obtain a label 44 for the data 42.

The proposed training works for neural network classifiers of any type that can have applications in split inference. Let $1_y$ for $y \leq K$ denote a one-hot vector of size K where all the entires are zero exept the entry at index i that is equal 1. For example, if K = 5, then $1_3$ = [0,0,1,0,0]. During training, for a data input X (of any type and dimensions) with one-hot labels $Y = 1_y$, we randomly select a secret $s \in \{1, ..., S\}$ and accordingly change (by encoding) the output's order to a setting specific to the chosen secret s. We assume that there is a mapping function $\mathcal{M}: (s, Y) \to Y^s$ that, for each s, it takes the current label Y and maps it to a new encoded label $Y^s$. A simple example of such a mapping function is the mathematical operation modulo (usually shown by symbol %): if $Y = 1_y$, then the new label is $Y^s = 1_{(y+s)\%K}$.

Thus, we force the model to learn the correct order for each pair of input (X, s) and thus provide the corresponding output $Y^s = \mathcal{F}(X, s)$. This technique can be applied to any neural network as we only need to concatenate an embedding layer for input s to one of the layers in the early part of the model

The layer position of input s provides a trade-off between the output secrecy (privacy) and classification accuracy (utility): adding s before layer 1 provides the best privacy but it makes the training procedure harder, and similarly, adding s before layer $L^1$ makes training easier but it might make it easier for a curious server to infer the chosen s and consequently the real output.

We assume that a service provider (that could be the same server in our setting, or any other party) trains the model by the following training procedure, and at inference time, it is only the client who controls the secret s input and thus it is only the client who knows the correct order for the outputs.

(A) Training procedure:

1. Inputs:

(1) $D = \{(X, Y)\}_{i=1}^{N}$ : a dataset including pairs of input and ground-truth label.

(2) $\mathcal{M}: (s, Y) \rightarrow Y^s$ : A mapping function from secret to outputs' order.

(3) $\mathcal{F} \equiv \mathcal{F}^2(\mathcal{F}^1(X, s))$ : a deep neural network including two partitions.

(4) Training hyperparameters: (E: number of epochs, B: bach size, ...)

2. Output: the trained model $\mathcal{F}$ .

3. ($D^{train}$, $D^{valid}$) ← D # Divide D into a training and a validation set.

4. Initialize the model $\mathcal{F}$

5. For e = 0 to E:

    a. For i = 0 to |D^train|/B:

        i.Sample a batch of B pairs of (X, Y) from the $D^{train}$
        ii.Sample a batch of B secretes s from $\in \{1, ..., S\}$
        iii.For each s and Y in the batch compute the new label $Y^s$ using $\mathcal{M}$

        iv.For each (X, $Y^s$, s) in the batch, compute the loss $\mathcal{L}(\mathcal{F}^2(\mathcal{F}^1(X, s)), Y^s)$

        v.Update the model $\mathcal{F}$ based on the average gradients of all computed losses.

    b. Compute the model's loss on the validation set $D^{valid}$

    c. Save the current model $\mathcal{F}$ if the validation loss is less the smallest validation loss so far.

6. Return the last model saved.

(B) Inference procedure:

1. At client side:

    a. Take the client's input X
    b. Sample a secret s from $\in \{1, ..., S\}$

    c. Compute the outputs of the cut layer $Z = \mathcal{F}^1(X, s)$
    d. Send Z to the server

2. At server side:

    a. Compute the secret outputs $Y^s = \mathcal{F}^2(Z)$
    b. Return $Y^s$ to the client

3. At client side:

a. Decode the output by the chosen secret and the reverse of the mapping function: $Y = \mathcal{M}^{-1}(s, Y^s)$

As a proof of concept, experiments on a simple neural network including some convolutional and fully-connected layers have been completed. We use CIFAR-10 dataset[1], where images are of the shape $32 \times 32 \times 3$, and each image is categorised in one of 10 possible classes: {plane, car, bird, cat, deer, dog, frog, horse, ship, truck}. In this experiment, we use a secret $s \in \{1, ...,10\}$ and use the modulo operation for the mapping function

```
==================================================================
Layer (type:depth-idx)            Output Shape         Param #
==================================================================
Net                               [1, 10]              --
├─Conv2d: 1-1                     [1, 32, 28, 28]      2,432
├─ReLU: 1-2                       [1, 32, 28, 28]      --
├─Conv2d: 1-3                     [1, 32, 24, 24]      25,632
├─ReLU: 1-4                       [1, 32, 24, 24]      --
├─MaxPool2d: 1-5                  [1, 32, 12, 12]      --
├─Conv2d: 1-6                     [1, 32, 8, 8]        25,632
├─ReLU: 1-7                       [1, 32, 8, 8]        --
├─MaxPool2d: 1-8                  [1, 32, 4, 4]        --
├─Flatten: 1-9                    [1, 512]             --
├─Linear: 1-10                    [1, 120]             61,560
├─ReLU: 1-11                      [1, 120]             --
├─Linear: 1-12                    [1, 84]              10,164
├─ReLU: 1-13                      [1, 84]              --
├─Linear: 1-14                    [1, 10]              850
==================================================================
Total params: 126,270
```

The input *s* can be positioned before any layer, as long as that layer is before the cut layer.

The inventors have compared results for different positioning of the secret input in 6 different layers (before the 2nd layer up to before the 8th layer) to analyze the model's behavior in different settings.

There is some limited (2%) loss of accuracy when the secret is applied at early layers (1 and 2) compared to no application of a secret. These results show that we can effectively apply one more layer of privacy protection to split inference applications, without compromising any significant accuracy.

While it takes longer for the model to learn the task, what the model learns generalizes well to the test data.

The randomization and auxiliary input can act as a useful regularization and thus lead to better generalization.

There is an increase in the cost of the training procedure, but it has almost no overhead at inference time.

A model designer can use the cut-layer and secret-layer position as a tuner to tradeoff accuracy with privacy, depending on the application use-case.

The model designer can add a secondary secret input *s* (e.g., a categorical variable $s \in \{1, ..., S\}$) to the model that shuffles (i.e., permutes) the output's order such that without knowing the value of *s,* the server (or any other untrusted party) cannot make a reliable inference about the outcome of this computation. That means, for any fix input data X with label Y, the order of the outputs of model will depends on the chosen *s*.

There is therefore provided a model that is flexible in changing the output's order, and at the same time it is accurate in providing the correct classification.

Use-case: Let us consider a server (service provider) (e.g. 24) that owns a classifier (e.g. 14) for predicting the type of disease based on the client's coughing sound. Let us assume that there are three possible classes: {Covid-19, Flue, Healthy}. Servers provide an application (e.g. 12) that can be installed on the client's smartphone. The client can open the app, and using the smartphone's microphone, record a few second audio (i.e. data X) of the client's coughing. Thus, the data X is an audio file. The client then can enter a secret s in the server's app. The server's app locally performs the first part of the computation $Z = \mathcal{F}^1(X, s)$ and only sends Z to the server. One can argue that the server's app might also send s to the server, but we emphasize that there are several techniques and situations where a server either do not or cannot violate the offered privacy protection by doing so. For instance, if the app is open source, then this can be easily noticed from the code. Or, even in the close source setting, the reverse engineering can reveal such a violation of honesty. Therefore, the assumption that the server's app is honest and only sends Z to the server is well aligned with the long term business plan of such service providers. At the server side, the outputs of classification are computed as

$Y^s = \mathcal{F}^2(Z)$ and will be send to the server's app running on the client's smartphone. As the app at client side knows s, the client will decode $Y^s$ to see whether there is any health issue or not. Notice that in this use case, there are several motivations for split inference: (1) privacy protection makes the clients more motivated to pay for such a service, and (2) keeping the later part of the model at server side helps the service provider to better protect its proprietary model and valuable service.

As illustrated in Fig 9 the controller 400, e.g. a controller circuitry, may be implemented using instructions that enable hardware functionality, for example, by using executable instructions of a computer program 406 in a general-purpose or special-purpose processor 402 that may be stored on a computer readable storage medium 404 (disk, memory etc.) to be executed by such a processor 402. The controller 400 may be implemented in the client apparatus 20 and/or the server apparatus 24. Further, the apparatuses 20 and/or 24 can comprise and/or be communicatively connected to one or more sensor devices. Further, the apparatuses 20 and/or 24 can comprise and/or be communicatively connected to one or more input/output devices, such as a display, microphone, loudspeaker, keyboard, vibration device, etc. or any combination thereof.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 20, 24 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 20 comprises:

at least one processor 402; and
at least one memory 404 including computer program code,
the at least one memory storing instructions that, when executed by the at least one processor 402, cause the apparatus at least to:

provide a first secret and data as inputs to a trained neural network to produce an output by inference;
send the output from the trained neural network to a remote server;
receive in reply from the server, an encoded label;
means for using a second secret to decode the encoded label to obtain a label for the data.

The apparatus 24 comprises:

at least one processor 402; and
at least one memory 404 including computer program code,
the at least one memory storing instructions that, when executed by the at least one processor 402, cause the apparatus at least to:

receive, from a remote apparatus 20, the outputs 13 from of the trained neural network 12;
provide the received output 13 as an input a different trained neural network 14 to produce an encoded label 52;
send the encoded label 52 to the remote apparatus 20.

As illustrated in Fig 10, the computer program 406 may arrive at the apparatus 20, 24 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 20, 24 may propagate or transmit the computer program 406 as a computer data signal.

Computer program instructions for causing an apparatus 20 to perform at least the following or for performing at least the following:

providing a first secret and data as inputs to a trained neural network 12 to produce an output 13 by inference;
sending the output 13 from the trained neural network 12 to a remote server 24; receiving in reply from the server 24, an encoded label 52;
using a second secret 40_2 to decode the encoded label 52 to obtain a label 44 for the data 42.

Computer program instructions for causing an apparatus 24 to perform at least the following or for performing at least the following:

receive, from a remote apparatus 20, the outputs 13 from of the trained neural network 12;
provide the received output 13 as an input a different trained neural network 14 to produce an encoded label 52;
send the encoded label 52 to the remote apparatus 20.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In some but not necessarily all examples, the apparatus 20 configured to communicate data from the apparatus 20, 24 with or without local storage of the data in a memory 404 at the apparatus 20 and with or without local processing of the data by circuitry or processors at the apparatus 20.

The data may, for example, be measurement data or data produced by the processing of measurement data.

The data may be stored in processed or unprocessed format.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long-range cellular radio communication such 5G (5th generation of the 3rd Generation Partnership Project (3GPP), or any generation of the 3GPP). The apparatus may comprise a communications interface such as, for example, a radio transceiver for communication of data. Alternatively or additionally, the apparatus may comprise a wired communications interface for sensing and/or reveiving of data.

The apparatus 20 may be part of the Internet of Things (IoT) forming part of a larger, distributed network.

The processing of the data, whether local or remote, can be, for example any type of sensor data, relevant to a specific sensor, such as may be for the purpose of health monitoring, data aggregation, patient monitoring, vital signs monitoring or other purposes. Alternatively, or additionally, the processing data can be any type of functional data of the apparatus 20 and/or 24, for example, battery level data, processor or battery temperature data, processor capacity data, display luminous level, keyboard usage data, communication latency data, etc. or any combination thereof.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 20 where it may produce an output sensible to the subject such as an audio output, visual output or haptic output. Alternatively or additionally, the output may be communicated to the apparatus 20 where it may produce instructions / adjustments for the apparatus, such as for battery function, processor function, display function, keyboard function, communication function, etc. or any combination thereof.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The access apparatus 20 and the server apparatus 24 can be the same device or can be different devices.

The terminal apparatus 20 can, for example, be an IoT device, a sensor device, a camera, smart glasses, a smart ring, a domestic appliance, a smart phone, a mobile communication device, a personal computer, a network access point, a home pod, a smart speaker, a television, a set-top box, a vehicle, a MCU (microcontroller unit), etc. or any combination thereof.

The server 24 can be an access apparatus, for example, be a smart phone, a mobile communication device, a personal computer, a network access point, a home pod, a smart speaker, a television, a set-top box, a vehicle, a MCU (microcontroller unit), etc.

In some other or additional examples, the server apparatus 24 can, for example, be a network server, a server computer, a base station, a network access point, a transmission-reception point, etc. or in any combinations.

As used here 'module' refers to a unit or apparatus that excludes certain parts/components that would be added by an end manufacturer or a user. The apparatus 20, the apparatus 22, the apparatus 24 can be modules.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:

   means for providing a first secret and data as inputs to a trained neural network to produce an output by inference;
   means for sending the output from the trained neural network to a remote server;
   means for receiving in reply from the server, an encoded label;
   means for using a second secret to decode the encoded label to obtain a label for the data.

2. An apparatus as claimed in claim 1, wherein the first secret and the second secret are the same secret.

3. An apparatus as claimed in claim 2, comprising means for randomly selecting the same secret from a population of sample secrets.

4. An apparatus as claimed in claim 3, wherein the population of sample secrets is controlled by the server.

5. An apparatus as claimed in any preceding claim, wherein the encoded label is a permuted one hot label, wherein the second secret recovers the unpermuted one hot label.

6. An apparatus as claimed in any preceding claim, further comprising means for decoding the encoded label using a decoding algorithm controlled by the server or means for decoding the encoded label using a modulo function.

7. An apparatus as claimed in any preceding claim, wherein the trained neural network is an encoder, defining one or more layers of artificial neurons, to be used as an input portion of a primary neural network that comprises the encoder and a predictor, defining one or more layers of artificial neurons, to be used as an output portion of the primary neural network.

8. An apparatus as claimed in claim 7, wherein the trained neural network, the encoder, is initially received from a server, where the data and the secret are inputs to the trained neural network, the encoder.

9. An apparatus as claimed in any preceding claim, wherein the data is input at a first layer of the trained neural network.

10. An apparatus as claimed in any preceding claim, wherein the first secret is input at a layer after the first layer of the trained neural network and/or

    first secret is input at a layer after the second layer of the trained neural network and/or
    first secret is input at a layer before the last layer of the trained neural network.

11. A system configured for split inference comprising a server and an apparatus as claimed in any preceding claim, wherein the server is configured to

    receive, from the apparatus, the outputs from of the trained neural network;
    providing the received output as an input a different trained neural network to produce an encoded label;
    sending the encoded label to the apparatus.

12. A system as claimed in claim 11, wherein the trained neural network is an encoder defining one or more layers of artificial neurons, to be used as an input portion of a primary neural network that comprises the encoder and a predictor, and the different trained neural network
is a predictor defining one or more layers of artificial neurons, to be used as an output portion of the primary neural network that comprises the encoder and the predictor.

13. A system as claimed in claim 12, where the server is configured to train the encoder and the predictor and provides the encoder to the apparatus

14. A system as claimed in claim 12 or 13, comprising means that, for each of a collection of different first secrets, uses a first secret to encode data to produce an encoded label using an encoding algorithm that is used to train the primary neural network that is then partitioned.

15. A system as claimed in claim 14 comprising means for providing the first secrets to the apparatus and for providing the encoder to the apparatus.

16. A method of providing privacy without encryption in relation to split inference comprising:

providing a first secret and data as inputs to a trained encoder neural network to produce an output by inference;
sending the output from the trained neural network to a remote server for completion of inference by a predictor;
receiving in reply from the server, an encoded label;
using a second secret to decode the encoded label to obtain a label for the data.

2

10

42

Train

NN

11

(X, Y)

44

FIG 1A

Trained

10

42

44

NN

FIG 1B

FIG 2

FIG 3A

FIG 3B

training

NN    14
12
$\mathcal{F}^1$ → $\mathcal{F}^2$
$z$

42

(X, Y, s)

40_1

40

50

40_2

M

44

10

11

52

52

FIG 4A

20    24

client    Split inference    server

TNN    10
Input X    12    14
42    $z$    52
$\mathcal{F}^1$ → $\mathcal{F}^2$
40_1    13

(X, s)-> Y

40

Secret s

40_2

M$^{-1}$

54

44

Label Y

52

52

encoded label $Y^s$

FIG 4B

FIG 5

FIG 6

FIG 7

500

```
┌─────────────────────────┐
│           502           │
└─────────────────────────┘
             │
             ▼
┌─────────────────────────┐
│           504           │
└─────────────────────────┘
             │
             ▼
┌─────────────────────────┐
│           506           │
└─────────────────────────┘
             │
             ▼
┌─────────────────────────┐
│           506           │
└─────────────────────────┘
```

FIG 8

400

```
┌─────────────────────────┐
│                         │
│  Processor        402   │
│                         │
└─────────────────────────┘
             ▲
             │
             ▼
┌─────────────────────────┐
│                Memory   │
│  ┌────────┐             │
│  │  406   │      404    │
│  └────────┘             │
└─────────────────────────┘
```

FIG 9

```
┌─────────────────────────┐
│  ┌────────┐             │
│  │  406   │     408     │
│  └────────┘             │
└─────────────────────────┘
```

FIG 10

Europäisches
Patentamt
European
Patent Office
Office européen
des brevets

# EUROPEAN SEARCH REPORT

**Application Number**

EP 22 20 4435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/108194 A1 (SAMRAGH RAZLIGHI MOHAMMAD [US] ET AL) 7 April 2022 (2022-04-07) * figure 1 * * figure 4 * * figure 5 * * paragraph [0003] – paragraph [0006] * * paragraph [0024] – paragraph [0025] * * paragraph [0032] – paragraph [0033] * * paragraph [0054] – paragraph [0075] * | 1-16 | INV. G06N3/08 G06N3/045 G06F21/60 |
| X | Samragh Mohammad ET AL: "PRIVATE SPLIT INFERENCE OF DEEP NETWORKS", , 28 September 2020 (2020-09-28), pages 1-13, XP055882600, Retrieved from the Internet: URL:https://openreview.net/references/pdf?id=Str8HFSGi9 [retrieved on 2022-01-24] * figure 1 * * figure 2 * * Section 1 * * Section 3 * | 1-16 | |

-/--

**TECHNICAL FIELDS SEARCHED (IPC)**

G06N
G06F

The present search report has been drawn up for all claims

| Place of search | Date of completion of the search | Examiner |
|---|---|---|
| Munich | 21 March 2023 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 20 4435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIRESHGHALLAH FATEMEHSADAT FMIRESHG@ENG UCSD EDU ET AL: "Shredder Learning Noise Distributions to Protect Inference Privacy", PROCEEDINGS OF THE TWENTY-FIFTH INTERNATIONAL CONFERENCE ON ARCHITECTURAL SUPPORT FOR PROGRAMMING LANGUAGES AND OPERATING SYSTEMS, ACM, NEW YORK, NY, USA, 9 March 2020 (2020-03-09), pages 3-18, XP058460506, DOI: 10.1145/3373376.3378522 ISBN: 978-1-4503-7102-5 * figure 3 * * Section 2. Phase I: Learning the Noise Distributions * * Section 3. Phase II: Noisy Inference * ----- | 1-16 | |

TECHNICAL FIELDS
SEARCHED (IPC)

The present search report has been drawn up for all claims

| Place of search | Date of completion of the search | Examiner |
|---|---|---|
| Munich | 21 March 2023 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 4435

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2023

| Patent document cited in search report | Publication date | Patent family member(s) | Publication date |
|---|---|---|---|
| US 2022108194 A1 | 07-04-2022 | US 2022108194 A1 | 07-04-2022 |
| | | WO 2022072861 A1 | 07-04-2022 |

EPO FORM P0459

For more details about this annex : see Official Journal of the European Patent Office, No. 12/82